(19) Europäisches Patentamt
European Patent Office
Office européen des brevets

(11) Numéro de publication: **0 466 223 A1**

(12) # DEMANDE DE BREVET EUROPEEN

(21) Numéro de dépôt: **91201448.7**

(51) Int. Cl.5: **C22B 7/02**, C22B 3/00

(22) Date de dépôt: **12.06.91**

(30) Priorité: **21.06.90 IT 8558790**

(43) Date de publication de la demande:
**15.01.92 Bulletin 92/03**

(84) Etats contractants désignés:
**AT BE CH DE DK ES FR GB GR IT LI LU NL SE**

(71) Demandeur: **SERVIZI COSTIERI s.r.l.**
**Via A. Righi, 10**
**I-30175 Marghera (Venezia)(IT)**

(72) Inventeur: **Patron, Germano Dr.**
**S. Polo 2510**
**Venezia(IT)**
Inventeur: **Salviato, Rolando**
**Via Pirandello 5**
**Spinea (Venezia)(IT)**

(74) Mandataire: **Bettello, Pietro, Dott. Ing. et al**
**Via Col d'Echele, 25**
**I-36100 Vicenza(IT)**

(54) **Procédé pour le traitement des particules fines provenant des électro-filtres des installations de puissance alimentées en huile minérale.**

(57) l'invention a pour objet un procédé pour le traitement des particules fines provenant des électro-filtres des installations de puissance alimentées en huile minérale, grâce auquel il est possible d'évacuer des eaux effluentes qui présentent des valeurs de concentration en métaux lourds inclus susceptibles de se trouver largement au-dessous des valeurs fixées par les règlements, lequel procédé permet en outre la récupération pratiquement totale du carbone et des métaux lourds renfermés dans les cendres.

EP 0 466 223 A1

La présente invention a pour objet un procédé destiné à permettre le traitement des particules fines provenant des électro-filtres équipant les installations de puisance alimentées en huile minérale.

Ces installations sont dotées de dispositifs généralement constitués par des électro-filtres propres à assurer l'épuration des fumées.

Les particules fines qui sont considérées ici et qui sont généralement désignées sous le nom de "cendres légères", renferment du carbone ainsi que des métaux tels par exemple que Al, Ca, Ba, Co, Fe, K, Na, Mg, Mn, Mo, Ni, Ti, V, Zn qui sont présents sous la forme soit d'oxydes, soit de sels.

La dispersion dans l'eau de ces "cendres" est généralement acide, cette acidité étant principalement due à des composés du soufre.

La cendre provenant d'une installation de puissance alimentée en huile minérale comporte les caractéristiques suivantes :

- le carbone est présent dans des pourcentages de l'ordre de 60 à 75 % en poids (p) ;
- les sels solubles représentent environ 10 à 40 % en poids ;
- la suspension aqueuse (10 %) comporte un pH ≦ 1 ;
- les oxydes métalliques principalement représentés sont inclus dans des pourcentages qui varient suivant les valeurs ci-après :

| | | | |
|---|---|---|---|
| $Al_2O_3$ | 0,5 à 5 | Ni O | 0,5 à 2,5 |
| Co O | 0,02 à 0,2 | $TiO_2$ | 0,05 à 1 |
| $Fe_2O_3$ | 1,5 à 10 | $V_2O_5$ | 1 à 7 |
| Mn O | 0,05 à 0,15 | Zn O | 0,02 à 0,05 |
| | | $MoO_2$ | 0,05 à 1,0 |

A l'heure actuelle, ces cendres sont évacuées à la décharge sans aucun traitement, ce qui peut provoquer des problèmes considérables sur le plan écologique par suite aussi bien de leur acidité intrinsèque que de la présence des sels, en risquant de donner lieu à des effluents renfermant des ions toxiques dans une quantité largement supérieure à celle prévue par les règlementations en vigueur. Par ailleurs, l'évacuation à la décharge de ces cendres constitue une perte inutile de carbone et des autres métaux inclus, sans possibilité aucune de recyclage.

Le but de la présente invention réside dans un procédé propre à éliminer toute nocivité des éléments toxiques présents dans les cendres considérées, ainsi qu'à récupérer le carbone et les autres métaux présents dans lesdites cendres.

Ce but est obtenu moyennant un procédé qui comprend les phases suivantes :

a) en premier lieu les particules sont mélangées avec de l'eau en vue de dissoudre les sels solubles ;

b) puis la boue susceptible d'être pompée (désignée généralement sous le terme de "slurry") provenant de la première phase est filtrée, en séparant de la sorte le carbone de la solution saline ;

c) on détruit alors les ions métalliques lourds moyennant introduction, dans la solution, tout d'abord d'un oxyde ou hydroxyde ou carbonate de magnésium, puis d'une base forte (hydroxyde de sodium et/ou de potassium) ;

d) ensuite on flocule le précipité et on le filtre de manière à séparer de la solution la plus grande partie des ions lourds insolubilisés ;

e) on introduit à ce moment une base forte dans la solution ;

f) et on flocule enfin cette solution, cette opération étant suivie d'une filtration et/ou d'une décantation.

Un tel processus est en mesure de permettre la récupération du carbone et des métaux à partir des cendres.

De plus les eaux effluentes quittent l'installation avec des caractéristiques qui respectent très amplement les règlements.

Dans ses revendications secondaires, l'invention vise essentiellement des conditions opératoires particulières qui, appliquées aux phases élémentaires précitées, permettent d'assurer au procédé une efficacité

remarquable. Plus précisément, ces conditions opératoires concernent, dans la première phase du procédé, la valeur du pH à laquelle doit être portée la solution, ladite valeur devant avantageusement varier de 1,5 à 2,2.

En outre, au cours de la phase d'élimination des ions lourds, il est préférable d'utiliser Mg $C0_3$ et/ou Mg 0 et/ou $Mg(0H)_2$ jusqu'à un pH de 5,5 à 6,5 et, par la suite, d'avoir recours à Na Oh et/ou KO H, jusqu'à obtenir un pH de l'ordre de 9,0 à 9,2.

les caractéristiques de l'invention vont maintenant être décrites de manière détaillée dans une forme particulière de réalisation, donnée à simple titre d'exemple non limitatif et avec l'aide de la planche de dessin annexée dans laquelle :

- La fig. 1 est une vue schématique d'une installation pour la mise en oeuvre du procédé suivant l'invention.

En préambule, on soulignera que les métaux lourds renfermés dans les cendres sont liés au type d'huile minérale utilisée dans l'installation de puissance ; de plus et surtout, on utilise le plus souvent, non pas une seule huile minérale, mais un mélange d'huile différentes en fonction des disponibilités du marché et des coûts.

De manière fondamentale, si on considère le radical $S0_4$ globalement présent dans l'effluent, on peut vérifier que 10 à 15 % de ce radical est présent sous forme d'une acidité libre ($H_2SO_4$) tandis que le restant est salifié avec des ions métalliques.

On sait par ailleurs qu'une fois très fortement chauffés (et c'est le cas des cendres à la sortie des électro-filtres), certains oxydes métalliques sont difficilement solubles avec des acides. Effectivement l'acidité sulfurique libre, dans les conditions opératoires envisagées, ne parvient pas à dissoudre complètement les oxydes métalliques (principalement $Fe_2\ 0_3$ - Ni 0 - $V_2\ 0_5$) qui seraient destinés à rester dans le résidu en tant que produits hautement insolubles.

On notera néanmoins qu'en tant que tels, ils ne constitueraient pas un problème sur le plan écologique.

Cela dit, la première phase du procédé réside dans la dispersion-dissolution des cendres dans de l'eau, cette opération étant réalisée à l'intérieur de récipients de dissolution 1. On utilisera avantageusement au moins deux récipients afin de favoriser la continuité de l'opération.

Le traitement du mélange cendres/eau peut être effectué selon les modes suivants :

a) dissolution, avec agitation et à température ambiante ;
b) dissolution à chaud (pratiquement jusqu'à retomber) ;
c) dissolution à la température ambiante en présence d'un réducteur ($S0_2$) ;
d) dissolution à chaud en présence d'un composé chellateur (beta-dichetone).

Les essais effectués ont permis d'obtenir les valeurs analytiques suivantes des trois métaux présents en majorité et extraits du mélange :

| ECHANTILLON | | a | b | c | d |
|---|---|---|---|---|---|
| V | % du produit sec | 5,5 | 6,1 | 6,3 | 6,8 |
| Ni | " " " | 1,3 | 1,9 | 1,3 | 2,0 |
| Fe | " " " | 1,7 | 1,9 | 2,3 | 2,4 |

Etant donné que le métal dont l'extraction est la plus intéressante est constitué par le vanadium, présent dans les cendres pour environ 8 %, on constate qu'en utilisant le mode de traitement a) ci-dessus, on réussit à extraire plus de 60 % de celui-ci. De ce fait, le mode suivant a) doit être préféré, aussi bien pour sa simplicité que pour son caractère économique, étant donné que les autres modes ne sont pas aptes à assurer un pourcentage d'extraction substantiellement plus important.

Sur le plan opératoire, le rapport minimal pour l'obtention d'un bon mélange peut varier de 1 (cendre) à 1,5 à 3 (eau), ces rapports étant calculés en poids.

Le temps de permanence dans le solvant varie de 1 à 4 heures.

Par ailleurs, on a pu constater de manière surprenante que tandis qu'à un pH $\leqq$ 1 le vanadium se solubilise sous forme de sulfate de vanadyle $V0(S0_4)$ qui est difficile à éliminer quantitativement lorsqu'on opère à des pH de l'ordre de 1,5 à 2, ce vanadium est solubilisé et éliminé sous forme de $V_2(SO_4)_3$ lequel est un sel qui permet une séparation quantitative aisée de l'hydroxyde correspondant V $(OH)_3$.

Avec les sels de vanadium peuvent en outre être présents des acides orthovanadiques $H_3V0_4$ et métavanadiques $HVO_3$.

Ceux-ci, en présence d'alcalis forts, donnent lieu à des sels hydrosolubles correspondants, ce qui se

révèlera particulièrement significatif par la suite.

De ce fait, le pH de la boue va se maintenir à des valeurs comprises entre 1,5 et 2, la valeur optimale s'étant révélée comme 1,8 ± 0,1.

Effectivement, une valeur trop élevée du pH provoquerait la précipitation du vanadium, tandis qu'une valeur trop basse donnerait lieu à la formation de sulfate de vanadyle comme on l'a déjà dit plus haut.

On procède ensuite à la phase de séparation carbone/eau. Cette opération est effectuée par filtrage, avantageusement en utilisant un filtre qui opère sous vide et avec paroi filtrante plane. Avec un tel type de filtre, les lavages de la masse carbonée peuvent être effectués à contre-courant, c'est-à-dire en ré-utilisant l'eau de lavage dont la quantité globale utilisée est ainsi diminuée, sans cependant modifier la qualité des eaux effluentes finales.

Le carbone résiduel est éliminé du système par le tapis transporteur 3. La récupération est conduite de façon à retirer un pourcentage ≧ à 95 % de l'effluent. Le carbone résiduel filtré contient 40 à 50 % d'humidité et l'acidité résiduelle éventuelle est neutralisée dans le dernier lavage, à l'aide d'alcalis (préférablement NaOH et/ou KOH) provenant du récipient 4.

La solution qui provient du filtrage et du lavage est acide par suite de la présence de $H_2$ $SO_4$ et elle renferme les sulfates des métaux lourds et non.

Plus particulièrement en ce qui concerne le vanadium, celui-ci peut être présent sous forme de sulfate de vanadium, de sulfate de vanadyle, d'acide ortho-vanadique et d'acide métavanadique.

Si l'on traitait la soluttion avec une base faible (par exemple $Ca(OH)_2$), on se heurterait d'une part à l'insolubilité des ions métalliques, mais en même temps à celle du sulfate de calcium bi-hydraté ; ce qui aboutirait à créer un double problème, à savoir :

1) difficulté subséquente dans l'extraction des ions des métaux utiles (par exemple Ni, V) ;

2) problème d'élimination des gypses qui en poids atteindraient celui du carbone initialement éliminé, le restant contenant encore une quantité excessive de vanadium et d'autres métaux potentiellement solubles.

Par ailleurs, si on neutralisait le radical $SO_4$ avec une base forte (NaOH et/ou KOH), on éliminerait le problème des gypses, mais on laisserait en solution les métavanadates et orthovanadates correspondants, en rendant toxiques et nuisibles les eaux effluentes. Vice-versa, on sait que les sels de calcium et de magnésium des acides vanadiques sont insolubles dans l'eau. Aussi, suivant l'invention, on opère avec MgO et/ou MgOH et/ou $MgCO_3$ du fait que le sulfate de magnésium qui se forme présente la caractéristique d'être très soluble dans l'eau.

On a effectué de multiples essais afin de déterminer jusqu'à quel point la solution doit être neutralisée. Compte-tenu de ces essais et en fonction de la solubilité du produit soluble et de la dissociation constante des composés du magnésium, on peut dire que ladite solution peut être neutralisée jusqu'à un pH compris entre 5,5 et 6.

Cette opération est réalisée dans le récipient 5 alors que les composés à base de magnésium, principalement $MgOH_2$, proviennent du récipient 6.

Le fait d'avoir précédemment utilisé des composés à base de magnésium permet de créer dans la boue un tampon tel que même avec des alcalis forts en excès, il n'est pas dangereux de solubiliser d'autres ions amphotères, mais on déplace éventuellement $Mg(OH)_2$ du sulfate avec une réaction du type

$$MgSO_4 + 2NaOH \quad Na_2SO_4 + Mg(OH)2$$

En pratique, à la fin de cette phase, les ions métalliques lourds sont insolubilisés substantiellement sous forme d'hydroxydes plus ortho et métavanadates de magnésium.

L'utilisation du poly-électrolyte provenant du récipient 7 permet de floculer le précipité et de le soumettre ensuite à l'action d'un filtre 8, avantageusement du même type que celui précédemmen indiqué.

Une fois filré, le précipité est alors éliminé du sysème à l'aide d'un tapis transporteur 9. les eaux primaires de filtration passent à la phase subséquente au niveau des récipients 10 et 11, tandis que l'eau de lavage des colloïdes pénètre à nouveau dans le cycle au niveau des récipients 1.

Après séchage, éventuellement à la sortie du lavage, le précipité filtré présente la composition moyenne suivante, en se référant aux hydroxydes principaux qui le forment :

| | | Résidu non lavé | Résidu lavé |
|---|---|---|---|
| V | % produit sec | 17,7 | 21,2 |
| Ni | " " " | 3,4 | 3,9 |
| Fe | " " " | 4,1 | 5,0 |

A ce moment, les eaux qui sont introduite dans le récipient 10 présentent substantiellement les concentrations suivantes en métaux lourds :

| | | |
|---|---|---|
| Cd | mg/l | 0,05 |
| Co | " | 0,28 |
| Cr III | " | 0,14 |
| Fe | " | 0,24 |
| Mn | " | 0,12 |
| Ni | " | 0,76 |
| Pb | " | 0,68 |
| Cu | " | 0,08 |
| Zn | " | 0,04 |
| V | " | 10,0 |

Les eaux séparées des hydroxydes non dissouts provenant du filtre 8 comportent alors des concentrations en vanadium qui, même si l'on ne considère pas les normes réglementaires, sont supérieures à 1 mg/l, tout en respectant les limites prévues par la loi pour les autres métaux et toujours en respectant les valeurs algébriques vis-à-vis des concentrations limites.

Au cours de la dernière phase du processus, on se propose de réduire la concentration du vanadium dans les eaux effluentes, ce qui permet d'obtenir des avantages sensibles au point de vue écologique comme du point de vue de la possibilité de récupération du vanadium.

En pratique, à la fin de la phase précédente, les ions métalliques lourds ont été insolibilisés sous forme d'hydroxydes, si bien que l'ion $Mg^{++}$ se trouve en solution.

Avec l'addition subséquente d'une base forte, (par exemple NaOH et/ou KOH) dans la solution, on retrouve la solution $Mg(OH)_2$.

Celle-ci se solubilise à l'état colloïdal qui comme tel a la propriété, confirmée expérimentalement, d'adsorber les ions métalliques.

A ce moment est par ailleurs inroduit dans la solution un poly-électrolyte ; après quoi la solution est transférée dans le récipient 11 où on la laisse décanter. Les eaux effluentes au niveau de la partie supérieure de ce récipient 11 présentent les caractéristiques moyennes ci-après :

| | |
|---|---|
| pH | : 9 (paramètre à contrôler "on line") |
| Température °C | : ambiante |
| Couleur | : incolore |
| Odeur | : inodore |
| Matières grossières | : aucune |
| Matières sédimentables | : aucune |
| Matières en suspension | : aucune |
| C.O.D. | : 80 (fonction poly-électrolyte) |
| Hg | : 0,0005 mg/l |

| | | |
|---|---|---|
| As | : 0,01 | " |
| Cd | : 0,036 | " |
| Co | : 0,19 | " |
| Cr III | : aucun | |
| Fe | : 0,09 | " |
| Mn | : 0,05 | " |
| Ni | : 0,23 | " |
| Pb | : 0,21 | " |
| Cu | : 0,03 | " |
| Zn | : 0,009 | " |
| V | : 0,26 | " |
| Sulfures | : aucun | |
| Sulfites | : indéterminé | |
| Sulfates | : 22300 | |
| Cl- | : 8 | " |
| $NH_4^+$ | : 4 | " |
| $NO_{2-}$ | : 0,2 | " |
| $NO_{3-}$ | : 2 | " |
| $PO_4^{3-}$ | : 0,1 | |

Vice-versa la solution qui occupe le fond du récipient 11 est prélevée et, éventuellement après une phase de filtrage ou accumulation, est ensuite ré-introduite dans les récipients 5.

## Revendications

1. Procédé pour le traitement de particules fines provenant des électro-filtres des insallations de puissance alimentées en huile minérale, caractérisé en ce qu'il comprend les phases suivantes :
   - mélange des particules avec de l'eau en vue de la dissolution des sels solubles ;
   - filtration de la boue pour séparation du carbone et de l'eau :
   - élimination des ions métalliques lourds moyennant introduction dans la boue d'oxydes ou hydroxydes ou sels de magnésium, puis d'une base forte ;
   - floculation du précipité et filtration de celui-ci en vue de séparer de la solution la plus grande

partie des ions lourds insolubilisés ;
- introduction d'une base forte dans la solution ;
- floculation de la solution, suivie d'une filtration et/ou d'une décantation.

**2.** Procédé suivant la revendication 1, caractérisé en ce que la première phase de mélange est réalisée avec un rapport cendres/eau de l'ordre de 1/2,5 à 3 (en poids), avec un pH compris enre 0,5 e 2, préférablement égal à 1,8± 0,1, le temps de permanence étant de l'ordre de 1 à 4 heures.

**3.** Procédé suivant la revendication 1, caractérisé en ce que la phase de filtration de la boue pour la séparation du carbone et de l'eau est réalisée dans un filtre sous vide à paroi filtrante plane, les lavages de la masse carbonée étant effectués à contre-courant.

**4.** Procédé suivant la revendication 1, caractérisé en ce que dans la phase d'élimination des ions métalliques lourds, on amène tout d'abord, par introduction de composés à base de magnésium, la solution à un pH compris entre 5,5 et 6, après quoi on amène la boue à un pH d'environ 9,00 à 9,2 à l'aide d'une base forte.

**5.** Procédé suivant la revendication 1, caractérisé en ce que la phase de filtration du précipité qui suit l'élimination des ions métalliques lourds est réalisée dans un filtre sous vide à paroi filtrante plane avec lavage à contre-courant.

**6.** Procédé suivant la revendication 1, caractérisé en ce qu'à la fin de la phase d'insolubilisation des ions métalliques lourds, comme avant de décharger les eaux effluentes, la solution est floculée à l'aide d'un poly-électrolyte.

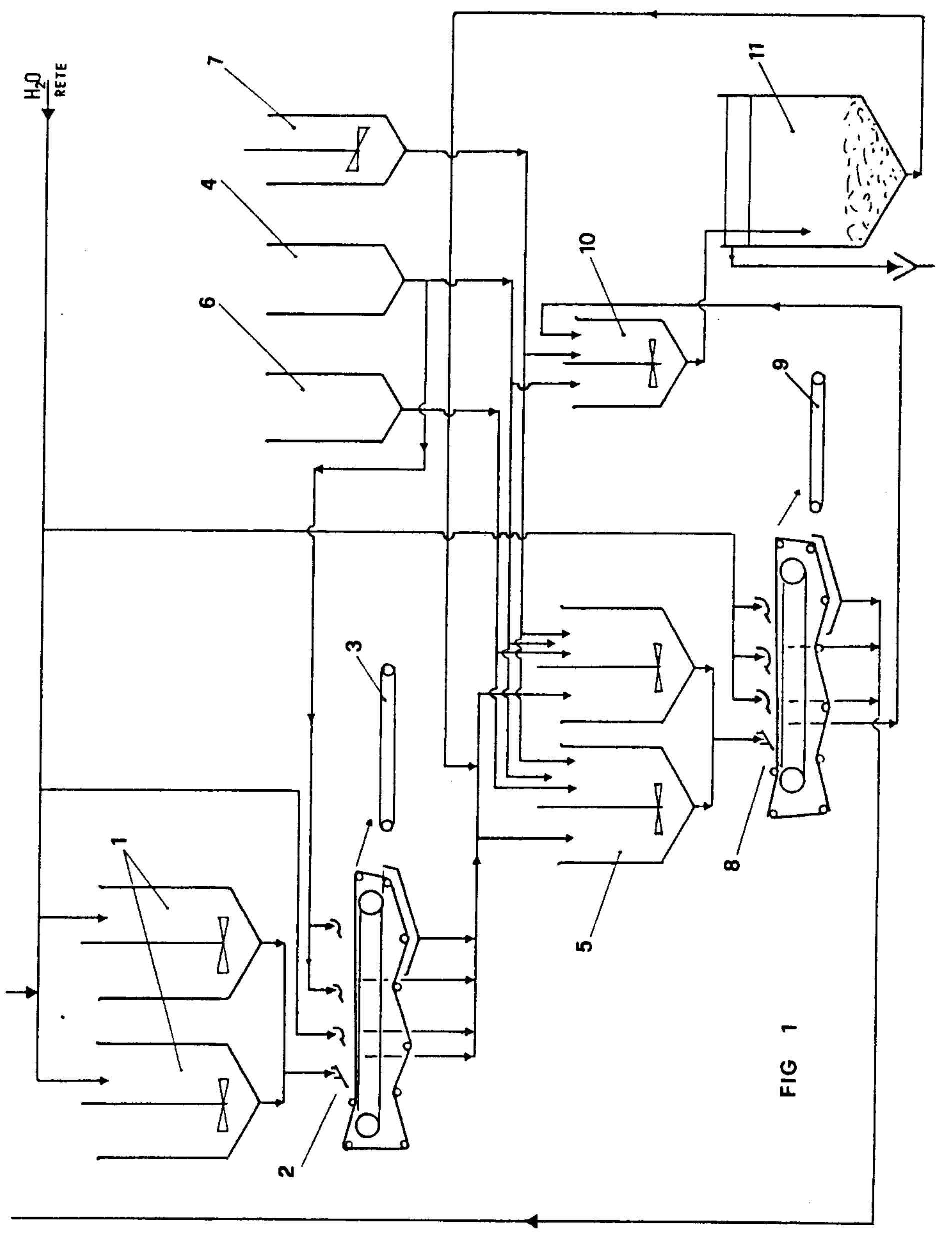


FIG 1

Office européen des brevets

# RAPPORT DE RECHERCHE EUROPEENNE

Numéro de la demande

**EP 91 20 1448**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 354 613 (METALLGESELLSCHAFT)1990<br>* revendications 1,2,4 * | 1 | C 22 B 7/02<br>C 22 B 3/00 |
| A | MINING ENGINEERING vol. 36, no. 2, Février 1984, pages 171 - 173; J. E. SCHILLER ET AL.: 'MAGNESIUM OXIDE FOR IMPROVED HEAVY METALS REMOVAL '<br>* page 171, colonne de gauche, ligne 1 - ligne 27 * | 1,4 | |
| A | EP-A-0 134 435 (COMPANIA ESPANOLA DE MINAS DE THARSIS) 20 Mars 1985<br>* revendications 1,4,5 * | 1 | |

| DOMAINES TECHNIQUES RECHERCHES (Int. Cl.5) |
|---|
| C 22 B |

Le présent rapport de recherche a été établi pour toutes les revendications

| Lieu de la recherche | Date d'achèvement de la recherche | Examinateur |
|---|---|---|
| La Haye | 08 octobre 91 | WITTBLAD U.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant